# EUROPÄISCHE PATENTSCHRIFT

(11) **EP 3 513 696 B1**
(45) Veröffentlichungstag und Bekanntmachung des Hinweises auf die Patenterteilung: **21.10.2020**
(21) Anmeldenummer: 19150501.5
(22) Anmeldetag: 07.01.2019
(51) Int. Cl.: A47J 36/06, A47J 43/07, A47J 19/02

(54) **KÜCHENMASCHINE MIT EINEM ABDECKELEMENT FÜR EIN ZUBEREITUNSGEFÄSS**
KITCHEN APPLIANCE WITH A COVER ELEMENT FOR A PREPARATION VESSEL
ROBOT DE CUISINE AVEC UN ÉLEMENT DE COUVERTURE POUR UN RÉCIPIENT DE PRÉPARATION

(30) Priorität: 17.01.2018 DE 202018100251 U
(43) Veröffentlichungstag der Anmeldung: 24.07.2019
(73) Patentinhaber: Vorwerk & Co. Interholding GmbH, 42275 Wuppertal (DE)
(72) Erfinder: Neubert, Isabell, 72218 Wildberg (DE); Thies, Felix, 42115 Wuppertal (DE)
(74) Vertreter: Müller, Enno

(56) Entgegenhaltungen:
- EP-A1- 1 917 889
- EP-A1- 2 698 088
- CN-U- 203 407 941
- CN-U- 207 202 774
- GB-A- 2 547 683
- US-A1- 2017 245 668

## Beschreibung

### Gebiet der Technik

Die Erfindung betrifft eine Küchenmaschine mit einem Basisgerät, einem an dem Basisgerät anordenbaren Zubereitungsgefäß und einem Abdeckelement für das Zubereitungsgefäß, wobei das Abdeckelement zum zumindest teilweisen Abdecken einer Gefäßöffnung des Zubereitungsgefäßes und/oder einer Deckelöffnung eines Gefäßdeckels für das Zubereitungsgefäß ausgebildet ist, wobei das Abdeckelement einen radial nach außen weisenden Auflagerand zur Auflage auf dem Zubereitungsgefäß und/oder dem Gefäßdeckel aufweist, wobei der Auflagerand in axiale Richtung betrachtet eine stetig gekrümmte Basiskontur aufweist und der Auflagerand mindestens zwei sich bezogen auf eine radiale Richtung gegenüberliegende und in einer Umfangsrichtung betrachtet voneinander gesonderte, über die Basiskontur hinausragende Auflageelemente aufweist, und wobei die in einer von einem radial äußeren Rand der Auflageelemente bis zu der Basiskontur reichenden gedachten Kreisringfläche sich erstreckenden Auflageelemente in der axialen Richtung betrachtet auf beiden gegenüberliegenden Seiten gleich und in derselben sich senkrecht zu der axialen Richtung erstreckenden Ebene ausgebildet sind, und wobei die Küchenmaschine eine Verriegelungseinrichtung zur Verriegelung des Abdeckelementes mit dem Zubereitungsgefäß aufweist, wobei das wahlweise nutzbare Abdeckelement im verriegelten Zustand oberseitig auf dem Zubereitungsgefäß aufliegt und von der Verriegelungseinrichtung erfasst ist und/oder auf dem Gefäßdeckel aufliegt und zugleich mit dem Gefäßdeckel von der Verriegelungseinrichtung erfasst ist.

### Stand der Technik

Küchenmaschinen der in Rede stehenden Art sind bekannt. Diese dienen insbesondere im Haushaltsbereich zur Herstellung von Speisen und/ oder Bearbeitung von Nahrungsmitteln. Die Küchenmaschinen weisen beispielsweise ein Basisgerät und ein mit dem Basisgerät verbindbares Zubereitungsgefäß auf. Das Zubereitungsgefäß trägt beispielsweise in einem Bodenbereich ein Rührwerk, welches insbesondere in Zuordnungsstellung des Zubereitungsgefäßes an der Küchenmaschine über einen küchenmaschinenseitigen Elektromotor antreibbar ist. Dem Zubereitungsgefäß kann des Weiteren eine Heizeinrichtung zugeordnet sein, welche in dem Zubereitungsgefäß befindliches Gargut erhitzt. Im Betrieb der Küchenmaschine ist das Zubereitungsgefäß üblicherweise von einem Gefäßdeckel überdeckt, welcher bevorzugt elektromotorisch an dem Zubereitungsgefäß verriegelbar ist, um so ein Abheben oder Abnehmen des Gefäßdeckels zu verhindern. In diesem Zusammenhang ist es weiter bekannt, dass sowohl der Gefäßdeckel als auch ein Gefäßrand des Zubereitungsgefäßes in einem Grundriss kreisrund ausgestaltet sind, so dass ein in Umfangsrichtung des Zubereitungsgefäßes bevorzugt ungerichtetes Auflegen des Gefäßdeckels auf das Zubereitungsgefäß möglich ist. Der insbesondere kreisrunde Grundriss weist eine stetig gekrümmte Basiskontur auf, welche im Falle einer Kreisform über den gesamten Umfang einen gleichbleibenden Krümmungsradius aufweist.

Des Weiteren ist es bekannt, dass der Gefäßdeckel eine Deckelöffnung aufweist, durch welche Zutaten in das Zubereitungsgefäß gegeben werden können bzw. welche zum Druckausgleich während eines Garprozesses der Küchenmaschine dient. Die Deckelöffnung kann des Weiteren zumindest teilweise durch einen Messbecher oder ähnliches verschlossen werden, um ein Hineingreifen in das Zubereitungsgefäß und/oder ein übermäßiges Austreten von heißem Dampf aus dem Zubereitungsgefäß zu verhindern.

Die Dokumente EP 2 989 947 A1 und EP 2 698 088 B1 offenbaren beispielsweise eine Küchenmaschine mit einem Zubereitungsgefäß und einem das Zubereitungsgefäß verschließenden Gefäßdeckel. Das Zubereitungsgefäß und der Gefäßdeckel werden mittels eines Verriegelungselementes verriegelt. Das Verriegelungselement übergreift in einer Verriegelungsstellung einen Teilbereich des Gefäßdeckels. Das Verriegelungselement ist dafür um eine Achse aus einer Freigabestellung in die Verriegelungsstellung schwenkbar, und umgekehrt. Vorzugsweise ist das Verriegelungselement in Erstreckungsrichtung der Achse langgestreckt ausgebildet ist. Das Verriegelungselement ist mit einem in der Küchenmaschine angeordneten Elektromotor verbunden, welcher die Drehung des Verriegelungselementes von der Freigabestellung in die Verriegelungsstellung, und umgekehrt, bewirkt.

Aus der GB 2547683 A ist eine Küchenmaschine mit einem Gefäßdeckel bekannt, der dreiteilig ausgebildet ist, nämlich aus einem äußeren Deckelteil, einem inneren Deckelteil und einer Dichtung besteht. Diese Teile müssen immer zusammen für einen Betrieb der Küchenmaschine angeordnet werden. Sie sind lediglich aus Reinigungsgründen vereinzelbar vorgesehen. Die Verriegelung kann nur vorgenommen werden, wenn die Dichtung an dem inneren Deckelteil angeordnet ist, wonach eine Verdrehung des äußeren Deckelteils in eine Verriegelungsstellung vorzunehmen ist. Das äußere Deckelteil weist einen in der Verriegelungsstellung blockierten Verriegelungsvorsprung auf. Nur hierdurch ist der Deckel insgesamt an dem Zubereitungsgefäß verriegelt.

Aus der US 2017/0245668 A1 ist ein Abdeckelement in der Gestaltung einer Zitruspresse für ein Zubereitungsgefäß bekannt. Dieses weist einen in Umfangsrichtung durchgehend eine gleiche radiale Erstreckung aufweisenden Auflagerand auf. Es kann auch nur in axialer Richtung mit einer Seite auf den Rand des Zubereitungsgefäßes aufgelegt werden, da auf der anderen Seite ein im Wesentlichen in der axialen Richtung abstehender Griff ausgeformt ist. Auch aus der EP 1917889 A1 ist für ein Zubereitungsgefäß ein nach Art einer Zitruspresse ausgebildetes Auflageelement bekannt, das in die Öffnung eines Gefäßdeckels einsetzbar ist. Das mit einem abnehmbaren Bodenteil ausgebildete Abdeckelement kann in axialer Richtung auch nur in einer Ausrichtung in den Gefäßdeckel eingesetzt werden. Der Auflagerand ist im Querschnitt konusförmig sich nach außen erweiternd gebildet. Aus der CN 207202774 U ist ein Abdeckelement für ein Zubereitungsgefäß bekannt, das zufolge am Auflagerand ausgebildeter Klemmvorsprünge, die auf einer Seite des Auflagerandes, unterseitig im Benutzungszustand, ausgebildet sind, befestigbar ist. Auch dieses Abdeckelement kann hinsichtlich seiner axialen Ausrichtung nur in einer Richtung auf dem Zubereitungsgefäß befestigt werden. Gleiches ist schließlich auch hinsichtlich der CN 203407941 U gegeben. Auch hier sind an dem Auflagerand Verriegelungselemente nur auf einer Seite bezogen auf die axiale Richtung ausgeformt.

### Zusammenfassung der Erfindung

Ausgehend von dem dargelegten Stand der Technik beschäftigt sich die Erfindung mit der Aufgabenstellung, eine Küchenmaschine anzugeben, bei welcher ein Abdeckelement für das Zubereitungsgefäß alternativ oder zusätzlich zu einem Gefäßdeckel mit dem Zubereitungsgefäß verriegelbar ist.

Diese Aufgabe ist beim Gegenstand des Anspruches 1 gelöst, wobei die Verriegelungseinrichtung mindestens zwei elektromotorisch antreibbare Verriegelungselemente aufweist, welche die Auflageelemente bezogen auf den verriegelten Zustand zumindest teilweise übergreifen.

Das Abdeckelement verfügt über Auflageelemente, welche geeignet sind, in dem verbundenen Zustand von Abdeckelement und Zubereitungsgefäß bzw. Abdeckelement und Gefäßdeckel in einen Verriegelungsbereich der Verriegelungseinrichtung der Küchenmaschine zu gelangen. Gegenüber der Basiskontur des Abdeckelementes bilden die Auflageelemente radiale Vorsprünge, welche sicherstellen, dass das Abdeckelement während eines Betriebs der Küchenmaschine nicht entfernt werden kann. Das Abdeckelement kann somit besonders vorteilhaft als Spritzschutz gegen ein Herausspritzen von Lebensmitteln aus dem Zubereitungsgefäß verwendet werden. Besonders vorzugsweise weist das Abdeckelement mindestens zwei Auflageelemente auf, wobei diese so ausgebildet und angeordnet sind, dass das Abdeckelement an radial gegenüberliegenden Bereichen des Abdeckelementes gehalten wird. Vorzugsweise weist das Abdeckelement in Umfangsrichtung eine Mehrzahl von Auflageelementen auf, insbesondere äquidistant angeordnete Auflageelemente, welche ein gleichzeitiges Herausdrehen aller Auflageelemente aus der Verriegelungseinrichtung verhindern. Das erfindungsgemäße Abdeckelement kann zusätzlich zu einem Gefäßdeckel des Zubereitungsgefäßes verwendet werden, wobei eine Außenkontur des Gefäßdeckels bevorzugt größer ist als die Basiskontur des Abdeckelementes, wobei die Auflageelemente Vorsprünge bilden, zwischen welchen der Gefäßdeckel aus einer axialen Richtung betrachtet sichtbar bleibt. Das Abdeckelement kann mit einem geringeren Durchmesser ausgebildet sein als der Gefäßdeckel selbst, beispielsweise so, dass vorrangig eine Deckelöffnung des Gefäßdeckels bedeckt ist. Dadurch kann das Abdeckelement mit möglichst geringem Materialaufwand, Gewicht und Größe hergestellt werden, bei trotzdem optimalem Schutz gegen ein Herausspritzen von Zubereitungsgut aus dem Zubereitungsgefäß. Die Auflageelemente können insbesondere eine geringere Materialstärke aufweisen als andere Teilbereiches des Auflagerandes des Abdeckelementes, so dass die Auflageelemente ohne Erzeugen eines nennenswerten Höhenunterschieds von der Verriegelungseinrichtung aufgenommen werden können.

Die Auflageelemente des Abdeckelementes greifen in einem verriegelten Zustand von Zubereitungsgefäß und Abdeckelement in die Verriegelungseinrichtung ein. Das Abdeckelement kann je nach der gewünschten Funktion entweder direkt auf einen Gefäßrand des Zubereitungsgefäßes aufgesetzt werden oder auf einen Gefäßdeckel, welcher das Zubereitungsgefäß zumindest teilweise bedeckt. Die Verriegelungselemente können beispielsweise als elektromotorisch antreibbare Verriegelungswalzen ausgebildet sein, welche von einer Verriegelungsstellung in eine Freigabestellung verlagerbar, insbesondere um eine Achse rotierbar, sind. In der Verriegelungsstellung übergreifen die Verriegelungselemente einen Teilbereich des Zubereitungsgefäßes, vorzugsweise gebildet durch einen nach außen weisenden oberen Rand des Zubereitungsgefäßes, mit dem daran angeordneten Abdeckelement und gegebenenfalls einem zwischen dem Zubereitungsgefäß und dem Abdeckelement angeordneten Gefäßdeckel. Die Auflageelemente des Abdeckelementes sind korrespondierend zu der Position der Verriegelungselemente an der Küchenmaschine so ausgebildet, dass diese in den Verriegelungsbereich der Verriegelungselemente ragen. Dazu können die Auflageelemente mindestens 10 mm, bevorzugt mindestens 15 mm über die Basiskontur des Auflagerandes des Abdeckelementes hinausragen. Vorzugsweise sind die Abdeckelemente so ausgebildet, dass unabhängig von einer Rotationsstellung des Abdeckelementes auf dem Zubereitungsgefäß stets mindestens ein Auflageelement in den Verriegelungsbereich eines Verriegelungselementes hineinragt, so dass ein Lösen des Abdeckelementes durch Herausdrehen eines einzelnen Auflageelementes aus dem Verriegelungsbereich des Verriegelungselementes nicht möglich ist. Die Auflageelemente weisen vorzugsweise eine so geringe Materialstärke auf, dass diese die übliche Höhe des Verriegelungsbereiches nicht übermäßig vergrößern. Insbesondere wird eine Materialstärke von 0,5 mm bis 3 mm vorgeschlagen.

Die in Umfangsrichtung gesonderten Auflageelemente des Abdeckelementes erstrecken sich in einer Ebene senkrecht zu der axialen Richtung und sind so vorteilhaft geeignet, auf dem Rand des Zubereitungsgefäßes oder dem Gefäßdeckel in beiden axialen Richtungen, also um 180 Grad gewendet, aufliegen zu können.

Das Auflageelement ist bezogen auf eine axiale Richtung vorzugsweise angrenzend an eine Stirnfläche des Abdeckelementes ausgebildet, so dass das Auflageelement bei Verbindung mit dem Zubereitungsgefäß bzw. dem Gefäßdeckel auf dem Zubereitungsgefäß bzw. dem Gefäßdeckel aufliegt und andere Teilbereiche des Abdeckelementes außerhalb des Zubereitungsgefäßes hält, und/oder eine Angriffsfläche für die Verriegelungseinrichtung schafft, deren Höhe der Verriegelungshöhe bei Verwendung eines Gefäßdeckels auf dem Zubereitungsgefäß entspricht. Bei dieser Ausgestaltung empfiehlt es sich, dass ein Abstand zwischen den beiden Stirnseiten des Abdeckelementes ungefähr der von dem Gefäßdeckel bereitgestellten Höhe an dem Zubereitungsgefäß entspricht, so dass die Verriegelungsstellung der Verriegelungseinrichtung gleichbleibt.

Der Auflagerand des Abdeckelementes kann eine Mehrzahl von Auflageelementen aufweisen, die miteinander zu einer über die Basiskontur hervorstehenden Gesamtform verbunden sind. Beispielsweise kann sich dadurch ein wellenförmiger Umfangsbereich des Auflagerandes oder ähnliches ergeben. Die Auflageelemente können unabhängig davon unterschiedliche Formen und Größen aufweisen. Als geeignete Formen kommen beispielsweise Dreiecke, Quadrate, Rechtecke, Ovale oder auch Freiformen in Frage. Besonders vorzugsweise sind die Auflageelemente an die Basiskontur des Abdeckelementes angespritzt.

Es wird insbesondere vorgeschlagen, dass ein Auflageelement um mindestens 10 mm, bevorzugt um mindestens 15 mm, über die Basiskontur radial hinausragt. Die Länge und/oder Fläche des Auflageelementes ist vorzugsweise so groß, dass dieses ausreichend weit in die Verriegelungseinrichtung hineinragen kann und somit zuverlässig von der Verriegelungseinrichtung gegen das Zubereitungsgefäß bzw. den Gefäßdeckel gedrückt werden kann. Es ergibt sich somit eine optimale Überlappung zwischen dem Abdeckelement und dem Verriegelungsbereich der Verriegelungseinrichtung.

Das Abdeckelement kann bezogen auf eine Flächenseite als Zitronenpresse mit einer zentralen kegelförmigen Erhebung ausgebildet sein. Das Abdeckelement dient einerseits vorzugsweise als Spritzschutz und andererseits als Zitronenpresse, welche auf das Zubereitungsgefäß aufgesetzt werden kann, gegebenenfalls unter zusätzlicher Zwischenanordnung eines Deckelelementes mit einer Deckelöffnung. Die zentrale kegelförmige Erhebung dient als eine Dornstruktur zum Auspressen von Zitrusfrüchten, wobei der gepresste Saft die Erhebung herabfließt und durch Durchgangsöffnungen des Abdeckelementes in das Zubereitungsgefäß fließen kann. Frucht- und Schalenstücke können vorzugsweise nicht durch die entsprechend dimensionierten Durchgangsöffnungen des Abdeckelementes hindurchtreten, so dass diese zurückgehalten werden. Sofern das als Zitronenpresse ausgebildete Abdeckelement umgekehrt, d. h. gewendet, auf das Zubereitungsgefäß aufgesetzt wird, dient die zentrale kegelförmige Erhebung zusätzlich als Spritzschutz gegen aus dem Zubereitungsgefäß hochspritzendes Zubereitungsgut. Insbesondere empfiehlt es sich, dass die Erhebung korrespondierend zu der Größe und Form einer Deckelöffnung eines Gefäßdeckels ausgebildet ist, so dass die Erhebung in die Deckelöffnung eingebracht werden kann und somit ein Herausspritzen von Zubereitungsgut zuverlässig verhindert. Bevorzugt ragt in diesem Fall die Erhebung soweit in die Deckelöffnung hinein, dass eine Spitze der Erhebung über eine Deckelunterseite, gegebenenfalls einen zum Inneren des Zubereitungsgefäßes eingezogenen Deckelrand, hinausragt.

Des Weiteren kann vorgesehen sein, dass die kegelförmige Erhebung hervorstehende Rippen und/oder eine Mehrzahl von Durchgangsöffnungen aufweist. Die Rippen dienen einem optimalen Ausquetschen von Zitrusfrüchten an der Erhebung. Die Durchgangsöffnungen sind für die Funktion der Zitronenpresse ausgebildet, den Saft in das Zubereitungsgefäß durchzulassen, und bei umgekehrter Benutzung, d. h. bei in das Zubereitungsgefäß hineinragender Erhebung, eine Ableitung von Dampf durch die Durchgangsöffnungen zu ermöglichen. Aufgrund der Schrägstellung der Öffnungsebenen der Durchgangsöffnungen relativ zu einem Bodenbereich des Zubereitungsgefäßes oder einer Rotationsebene eines Rührwerks können Spritzer wirksam zurückgehalten werden.

Des Weiteren wird vorgeschlagen, dass das Abdeckelement eine Vielzahl von in radialer Richtung und/oder Umfangsrichtung hinter- und/oder nebeneinanderliegenden Durchgangsöffnungen aufweist. Durch diese Ausgestaltung dient das Abdeckelement nicht nur zur Verhinderung eines Herausspritzens von Zubereitungsgut aus dem Zubereitungsgefäß, sondern vielmehr auch zum gezielten Aus- und/oder Einlassen von Medien aus dem Zubereitungsgefäß bzw. in das Zubereitungsgefäß. Somit können zumindest einige der Durchgangsöffnungen so ausgestaltet sein, dass Dampf aus dem Zubereitungsgefäß entweichen kann, um einen optimalen Druckausgleich des Zubereitungsgefäßes während eines Garprozesses zu ermöglichen. Des Weiteren kann das Abdeckelement als Abseihsieb dienen, um Flüssigkeit auch bei aufgelegtem Abdeckelement aus dem Zubereitungsgefäß abfließen lassen zu können. Bei einem Verkippen des Zubereitungsgefäßes mit aufgelegtem Abdeckelement bleibt das stückige Zubereitungsgut in dem Zubereitungsgefäß, während Wasser durch die Durchgangsöffnung des Abdeckelementes strömen kann. Es ergibt sich somit ein multifunktionales Abdeckelement für das Zubereitungsgefäß. Auf der in Richtung des Zubereitungsgefäßes weisenden Seite kann das Abdeckelement des Weiteren eine kegelförmige Struktur aufweisen, welche verhindert, dass Spritzer von Zubereitungsgut die Durchgangsöffnungen passieren können. Die kegelförmige Struktur kann die Rückseite der Erhebung einer als Zitronenpresse ausgebildeten Struktur sein. Auf der Kegelform ausgebildete Durchgangsöffnungen stehen vorzugsweise schräg zu einer Bodenfläche des Zubereitungsgefäßes, insbesondere auch schräg zu einer Rotationsebene eines Rührwerks, welches innerhalb des Zubereitungsgefäßes angeordnet ist, so dass ein ungewünschtes Durchdringen der Durchgangsöffnungen durch Spritzer aufgrund der geometrischen Gegebenheiten erschwert ist. Die Ableitung von Dampf ist jedoch ungehindert möglich.

Insbesondere wird vorgeschlagen, dass eine Durchgangsöffnung eine Größe von ca. 1 mm² bis 200 mm², insbesondere von 10 mm² bis 100 mm², aufweist. Die Durchgangsöffnungen können unterschiedliche Formen und Größen aufweisen. Beispielsweise ist es möglich, mehrere oder alle Durchgangsöffnungen kreisrund auszubilden, oder mehrere oder alle Durchgangsöffnungen länglich oder bogenförmig auszubilden. Je nach der Position der jeweiligen Durchgangsöffnung auf dem Abdeckelement und gegebenenfalls einer Ausbildung bestimmter Funktionszonen auf dem Abdeckelement, kann eine Form und/oder Größe der Durchgangsöffnungen variieren. Eine Funktionszone des Abdeckelementes, welche vorrangig dem Spritzschutz dient, kann beispielsweise kleinere Durchgangsöffnungen aufweisen als eine Funktionszone, welche vorrangig zum Abseihen dient.

In diesem Zusammenhang wird des Weiteren vorgeschlagen, dass in radial nach außen weisende Richtung aufeinanderfolgende Durchgangsöffnungen ansteigende Größen aufweisen, so dass eine näher an dem Auflagerand ausgebildete Durchgangsöffnung größer ist als eine demgegenüber weiter von dem Auflagerand beabstandete Durchgangsöffnung. Von innen nach außen betrachtet - bezogen auf die radiale Richtung des Abdeckelementes - können die Durchgangsöffnungen somit größer werden, so dass das Abdeckelement nahe seines Auflagerandes geeignet ist, die Funktion eines Abseihsiebes zu erfüllen, wobei einerseits Flüssigkeit optimal aus dem Zubereitungsgefäß herausgelassen werden kann und andererseits Zubereitungsgut an einem Verlassen des Zubereitungsgefäßes gehindert wird. Ein demgegenüber zentraler Funktionsbereich des Abdeckelementes kann beispielsweise relativ kleine Durchgangsöffnungen aufweisen, die geeignet sind, ausschließlich Dampf durchtreten zu lassen, jedoch Spritzer von heißem Zubereitungsgut zurückzuhalten.

Des Weiteren kann vorgesehen sein, dass das Zubereitungsgefäß einen Gefäßdeckel mit einer zentralen Deckelöffnung aufweist, wobei der Gefäßdeckel bezogen auf einen verriegelten Zustand und bezogen auf eine axiale Richtung zwischen dem Zubereitungsgefäß und dem Abdeckelement angeordnet ist. In dem Verriegelungszustand befindet sich das Abdeckelement über der zentralen Deckelöffnung des Zubereitungsgefäßes, so dass innerhalb des Zubereitungsgefäßes hochspritzendes Zubereitungsgut vor das Abdeckelement spritzt und somit nicht aus dem Zubereitungsgefäß gelangen kann.

In Verbindung mit der Küchenmaschine kann das Abdeckelement wie zuvor erläutert verschiedene Funktionen aufweisen, nämlich neben einer Funktion als Spritzschutz und Zitronenpresse zudem auch als Abseihsieb, wobei in dem Abdeckelement ausgebildete Durchgangsöffnungen einen Durchtritt von Flüssigkeiten erlauben, jedoch in dem Zubereitungsgefäß befindliches festes Zubereitungsgut zurückhalten. Für verschiedene Aufgaben kann ein Nutzer der Küchenmaschine zudem unterschiedliche Teilbereiche des Abdeckelementes nutzen. Beispielsweise kann ein Teilbereich mit relativ großen Durchgangsöffnungen zum Abseihen dienen, während ein Bereich mit demgegenüber kleineren Durchgangsöffnungen zum Zurückhalten von Flüssigkeit und Gargut, jedoch zum Durchtritt von Dampf dient. In jedem Fall ist das Abdeckelement so auszubilden, dass der Spritzschutz gewährleistet ist, so dass ein ungewolltes Herausspritzen von Flüssigkeit aus dem Zubereitungsgefäß verhindert ist.

### Kurze Beschreibung der Zeichnungen

Im Folgenden wird die Erfindung anhand von Ausführungsbeispielen näher erläutert. Es zeigen:
- Fig. 1: eine erfindungsgemäße Küchenmaschine mit einem Zubereitungsgefäß, einem Gefäßdeckel und einem Abdeckelement,
- Fig. 2: das Zubereitungsgefäß mit dem Gefäßdeckel und dem Abdeckelement in einer Seitenansicht,
- Fig. 3: das Zubereitungsgefäß mit dem Abdeckelement, wobei das Abdeckelement gegenüber der in Fig. 1 und 2 gezeigten Stellung gewendet auf das Zubereitungsgefäß aufgelegt ist (ohne zwischengeordneten Gefäßdeckel),
- Fig. 4: das Zubereitungsgefäß mit dem Abdeckelement gemäß Fig. 3 in einer Seitenansicht,
- Fig. 5: eine perspektivische Ansicht der in Figur 3 dargestellten Seite des Abdeckelementes,
- Fig. 6: eine Seitenansicht des Abdeckelementes gemäß Fig. 5,
- Fig. 7: eine Draufsicht auf das Abdeckelement gemäß den Figuren 5 und 6,
- Fig. 8: eine Seitenansicht eines Gefäßdeckels mit daran angeordnetem Abdeckelement (der Anordnung gemäß Fig. 1 entsprechend),
- Fig. 9: eine perspektivische Ansicht auf das Abdeckelement und den Gefäßdeckel gemäß Fig. 8,
- Fig. 10: eine Draufsicht auf das Abdeckelement und den Gefäßdeckel gemäß Fig. 9 sowie ein Verriegelungselement (Verriegelungszustand),
- Fig. 11: ein Abdeckelement gemäß einer weiteren Ausführungsform mit einem Verriegelungselement (Freigabezustand),
- Fig. 12: ein Abdeckelement gemäß einer weiteren Ausführungsform mit einem Verriegelungselement (Freigabezustand),
- Fig. 13: ein Abdeckelement gemäß einer weiteren Ausführungsform mit einem Verriegelungselement (Freigabezustand),
- Fig. 14: eine mögliche Form für ein Auflageelement,
- Fig. 15: eine weitere mögliche Form für ein Auflageelement,
- Fig. 16: eine weitere mögliche Form für ein Auflageelement,
- Fig. 17: eine weitere mögliche Form für ein Auflageelement,
- Fig. 18: eine erfindungsgemäße Küchenmaschine mit der in Fig. 3 dargestellten Anordnung aus einem Zubereitungsgefäß und einem Abdeckelement in verriegeltem Zustand.

### Beschreibung der Ausführungsformen

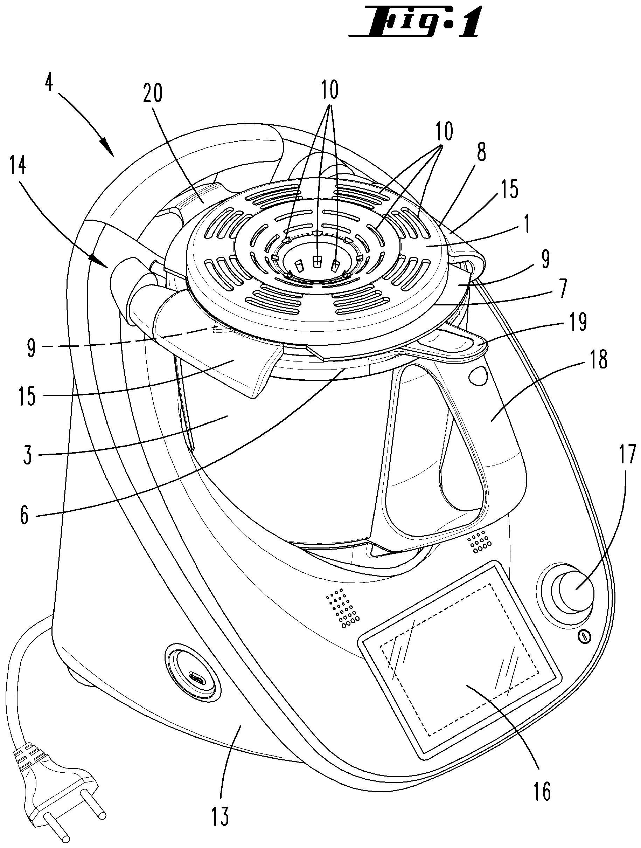

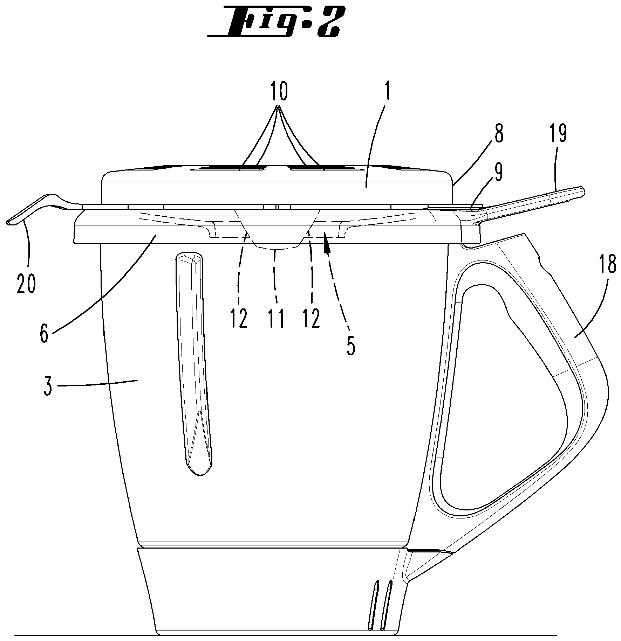

Figur 1 zeigt lediglich beispielhaft eine elektromotorisch betriebene Küchenmaschine 4, welcher hier als kombiniertes Koch-Mix-Gerät ausgebildet ist. Die Küchenmaschine 4 weist beispielsweise ein Basisgerät 13 zur lösbaren Anordnung eines Zubereitungsgefäßes 3 auf. Das Zubereitungsgefäß 3 weist einen Gefäßgriff 18 und einen Gefäßdeckel 6 mit einer Deckelöffnung 5 (siehe Figur 2) und einem Deckelgriff 19 auf. Die Deckelöffnung 5 ist durch ein erfindungsgemäßes Abdeckelement 1 überdeckt. Das Abdeckelement 1 ist hier beispielsweise als ein Spritzschutzelement ausgebildet, welches verhindert, dass Zubereitungsgut, beispielsweise heiße Medien, aus dem Zubereitungsgefäß 3 herausspritzen können.

An dem Basisgerät 13 der Küchenmaschine 4 sind des Weiteren ein Display 16 und ein Schalter 17 angeordnet, über welche eine Menüführung der Küchenmaschine 4 gesteuert werden kann, beispielsweise um die Zubereitung von Speisen innerhalb des Zubereitungsgefäßes 3 anhand eines ebenfalls darüber auswählbaren Rezeptes zu steuern. Auf dem Display 16 können dem Nutzer beispielsweise einzelne Abarbeitungsschritte einer automatischen Rezeptzubereitung angezeigt werden, sowie benötigte Zutaten für die Zubereitung, die der Nutzer in das Zubereitungsgefäß 3 einzufüllen hat. Mittels des Schalters 17 kann der Nutzer beispielsweise eine Eingabe bestätigen, Abarbeitungsschritte starten und dergleichen. Der Gefäßdeckel 6 des Zubereitungsgefäßes 3 wird mittels einer Verriegelungseinrichtung 14 an dem Zubereitungsgefäß 3 fixiert, so dass es bei einem Betrieb der Küchenmaschine 4 nicht zu einem ungewünschten Öffnen des Zubereitungsgefäßes 3 kommen kann. Die Verriegelungseinrichtung 14 weist hier zwei als Verriegelungswalzen ausgebildete Verriegelungselemente 15 auf, welche von einer Verriegelungsstellung in eine Freigabestellung rotieren können, und umgekehrt.

Das Basisgerät 13 der Küchenmaschine 4 weist einen Gefäßaufnahmebereich auf, mit welchem das Zubereitungsgefäß 3 lösbar verbunden ist. Der Gefäßaufnahmebereich ist hier beispielsweise als Vertiefung geformt, in welche das Zubereitungsgefäß 3 eingesetzt werden kann. Der Gefäßaufnahmebereich kann elektrische Kontakte aufweisen, welche eine Energieversorgung für elektrische Verbraucher des Zubereitungsgefäßes 3 bereitstellen. Zu diesem Zweck kann an dem Gefäßaufnahmebereich beispielsweise eine Leiste mit elektrischen Kontakten ausgebildet sein, mit welchen korrespondierende elektrische Kontakte des Zubereitungsgefäßes 3 zusammenwirken. Das Zubereitungsgefäß 3 weist hier an einem Gefäßboden beispielsweise eine Bodenöffnung (nicht dargestellt) auf, durch welche ein Teil eines Rührwerks hindurchgeführt werden kann. Das Rührwerk kann mit einer Motorwelle eines Elektromotors der Küchenmaschine 4 verbunden werden. Das Rührwerk kann beispielsweise ein Messersatz mit einer Mehrzahl von Messern sein, die in das Zubereitungsgefäß 3 ragen und Zubereitungsgut zerkleinern oder rühren können. In einer Wandung und/oder dem Gefäßboden des Zubereitungsgefäßes 3 kann des Weiteren eine Heizeinrichtung (nicht dargestellt) ausgebildet sein. Die Heizeinrichtung kann beispielsweise eine Dickschichtheizung sein, welche in das Material der Gefäßwandung integriert ist und über die Energieversorgung des Basisgerätes 13 der Küchenmaschine 4 mit elektrischer Energie versorgt wird.

Das Abdeckelement 1 weist einen Auflagerand 7 zur Auflage auf einen Rand des Zubereitungsgefäßes 3 bzw. des Gefäßdeckels 6 auf. Von oben oder von der Seite betrachtet, weist der Auflagerand 7 des Abdeckelementes 1 eine Basiskontur 8 auf. Die Basiskontur 8 ist bezogen auf eine Draufsicht, auf die Seite des Abdeckelementes 1, auf welcher sich eine die Basiskontur 8 bildende topfförmige Ausformung erhebt, der radial äußere Rand des topfförmigen Bereiches, der in den Auflagerand 7 übergeht. Da die Basis des Abdeckelementes 1 hier rund ausgebildet ist, ist die Basiskontur 8 entsprechend ein Kreis. Über die Basiskontur 8 stehen mehrere Auflageelemente 9 nach außen hervor, wobei sich beispielsweise jeweils zwei der Auflageelemente 9 bezogen auf den Mittelpunkt der Kreisform gegenüberliegen. Das Abdeckelement 1 weist eine Vielzahl von Durchgangsöffnungen 10 auf, welche ausgehend von dem Mittelpunkt nach radial außen größer werden. Des Weiteren verfügt das Abdeckelement 1 über einen Abdeckelementgriff 20, welcher zum Abnehmen und Auflegen des Abdeckelementes 1 auf das Zubereitungsgefäß 3 bzw. den Gefäßdeckel 6 dient.

Die Basis des Abdeckelementes 1, die wie ausgeführt bevorzugt topfförmig gebildet ist, bildet weiter auch eine Stirnfläche des Abdeckelementes 1, die in der einen axialen Ausrichtung mit ihrer Erhebung 11 nach außen weist, wobei zugleich die kegelförmige Erhebung 11 in einem Benutzungszustand in das Innere des Zubereitungsgefäßes 3 gerichtet ist. In der anderen axialen Ausrichtung weist entsprechend die kegelförmige Erhebung 11 nach außen und ist entsprechend radial innen zu dem Auflagerand 7 die topfartige Vertiefung sich anschließend gegeben, die dann weiter nach radial innen in die zentrale Erhebung 11 übergeht.

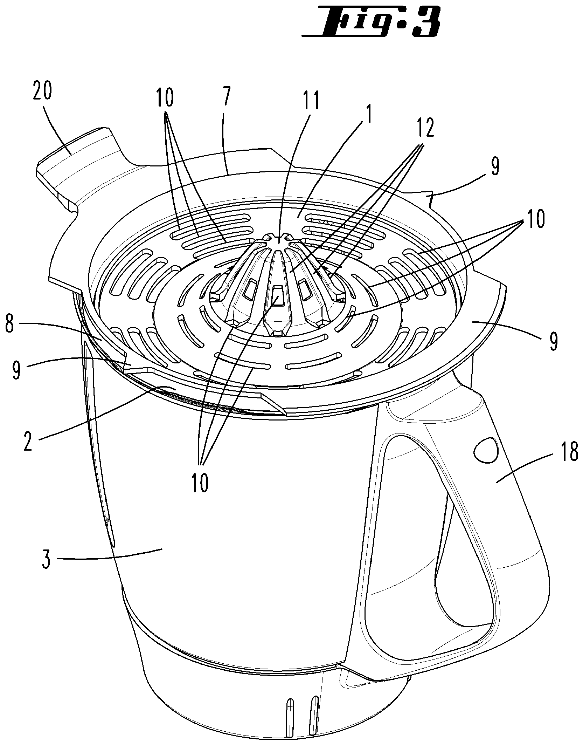

Das Abdeckelement 1 kann von zwei verschiedenen Seiten benutzt werden, d. h. je nach gewünschter Funktion auf eine der beiden großen Flächenseiten aufgelegt werden. Die Figuren 1 und 2 zeigen das Abdeckelement 1 von einer ersten Flächenseite, während beispielsweise die Figuren 3 bis 5 das Abdeckelement 1 von der gegenüberliegenden Seite zeigen.

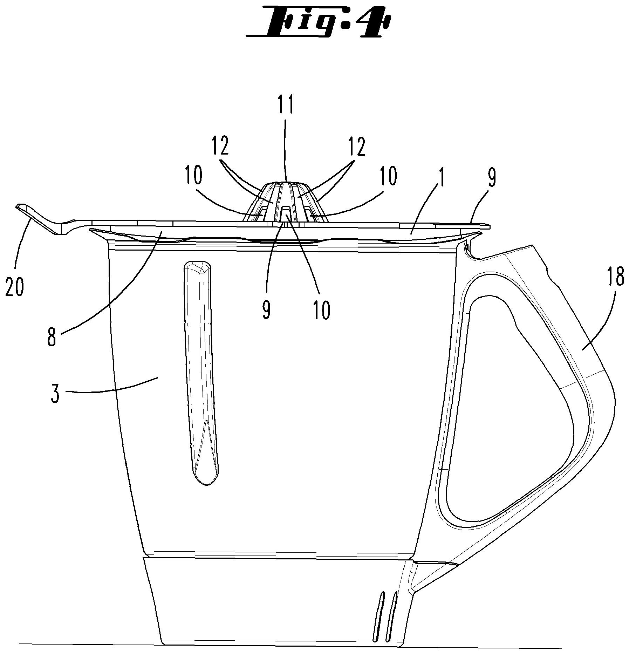

In den Figuren 3 und 4 ist das Abdeckelement 1 direkt auf das Zubereitungsgefäß 3 aufgelegt, d. h. ohne Zwischenanordnung eines Gefäßdeckels 6. Die dort nach oben weisende Seite des Abdeckelementes 1 ist als eine Zitronenpresse ausgebildet, welche eine zentrale Erhebung 11 aufweist. An der zentralen Erhebung 11 sind mehrere Rippen 12 zum Auspressen von Zitrusfrüchten ausgebildet. Des Weiteren befinden sich an der Erhebung 11 Durchgangsöffnungen 10 zum Durchtritt von Saft in das Zubereitungsgefäß 3. Die Auflageelemente 9 des Abdeckelementes 1 liegen nicht auf dem Rand des Zubereitungsgefäßes 3 auf, sondern sind von diesem beabstandet, nämlich um einen Betrag, der ungefähr der Höhe eines üblicherweise mit dem Zubereitungsgefäß 3 benutzten Gefäßdeckels 6 entspricht.

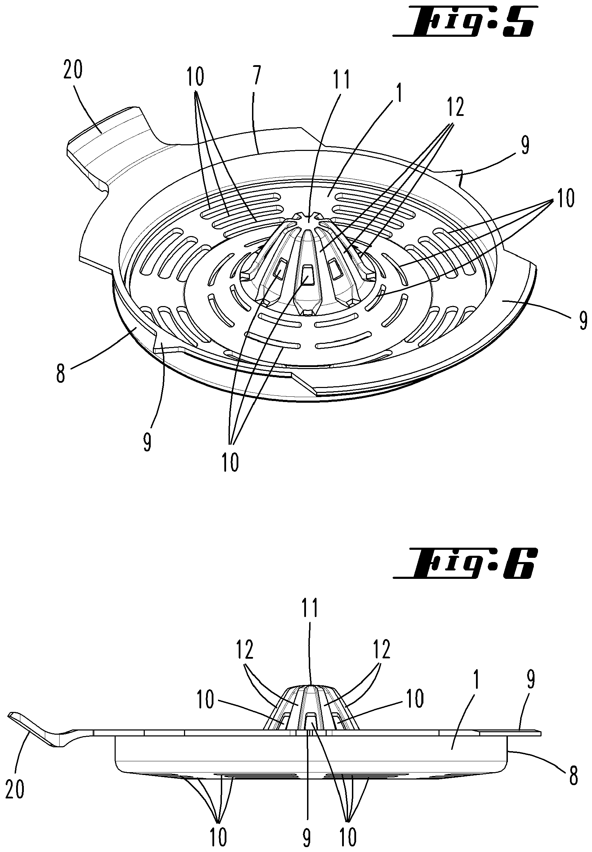

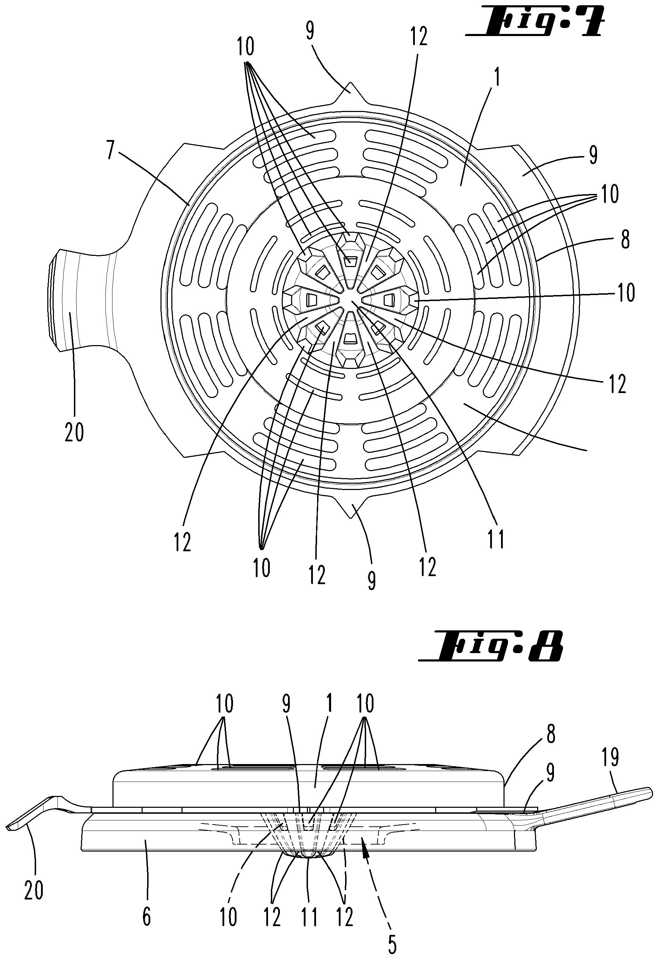

Die Figuren 5 bis 7 zeigen das Abdeckelement 1 in einer Alleinstellung, wobei die als Zitronenpresse ausgebildete Seite des Abdeckelementes 1 nach oben weist. Die Figuren 8 bis 10 zeigen das Abdeckelement 1 in einer Orientierung, bei welcher die als Zitronenpresse ausgebildete Seite nach unten weist.

Figur 8 zeigt eine Kombination aus einem Gefäßdeckel 6 und einem Abdeckelement 1. Der Gefäßdeckel 6 weist eine Deckelöffnung 5 auf, in welche die Erhebung 11 des Abdeckelementes 1 eingesetzt ist. In dieser Kombination von Abdeckelement 1 und Gefäßdeckel 6, welche auch Teil der Figur 1 ist, kann das Abdeckelement 1 als Spritzschutz während einer Zubereitung von Zubereitungsgut innerhalb des Zubereitungsgefäßes 3 verwendet werden. Die durch die Deckelöffnung 5 hindurchgesteckte Erhebung 11 des Abdeckelementes 1 dient durch ihre besondere Konstruktion mit schräg verlaufenden Wänden als zusätzlicher Spritzschutz, welcher dafür sorgt, dass Spritzer nicht nach außen dringen können. Die in der Erhebung 11 ausgebildeten Durchgangsöffnungen 10 dienen der Ableitung von Dampf durch die Deckelöffnung 5. Sofern das Abdeckelement 1 in der gezeigten Orientierung ohne Zwischenanordnung eines Gefäßdeckels 6 unmittelbar auf den Rand eines Zubereitungsgefäßes 3 aufgesetzt wird, kann das Abdeckelement 1 vorteilhaft als Abseihsieb verwendet werden. Die Ausgestaltung der Durchgangsöffnungen 10, insbesondere mit ausgehend von einem Mittelpunkt nach radial außen sich vergrößernden Durchgangsöffnungen 10 gewährleistet, dass Flüssigkeit aus dem Zubereitungsgefäß 3 abgegossen werden kann, andererseits jedoch Zubereitungsgut nicht aus dem Zubereitungsgefäß 3 entweichen kann.

Die Durchgangsöffnungen 10 der in den Figuren 1 bis 10 dargestellten Ausführungsform eines beispielhaften Abdeckelementes 1 weisen bezogen auf einen randnahen Flächenbereich eine längliche, gekrümmte Form auf. Die zentralen Durchgangsöffnungen 10 der Erhebung 11 sind hingegen beispielsweise polygonförmig (oder alternativ quadratisch oder rund) ausgebildet, mit ungefähr gleichen Seitenlängen. Die länglichen Durchgangsöffnungen 10 weisen beispielsweise eine Breite von 10 mm und eine Länge von 50 mm (bezogen auf die größten/ äußersten Durchgangsöffnungen 10) auf. Von radial außen nach radial innen werden die Durchgangsöffnungen 10 kleiner, sowohl in Bezug auf deren Länge, als auch in Bezug auf deren Breite. Dadurch wird im Bereich des Auflagerandes 7 eine Abseihfunktion des Abdeckelementes 1 geschaffen, während die Durchgangsöffnungen 10 neben und auf der Erhebung 11 eher als Spritzschutz und zum Durchlassen von Dampf dienen.

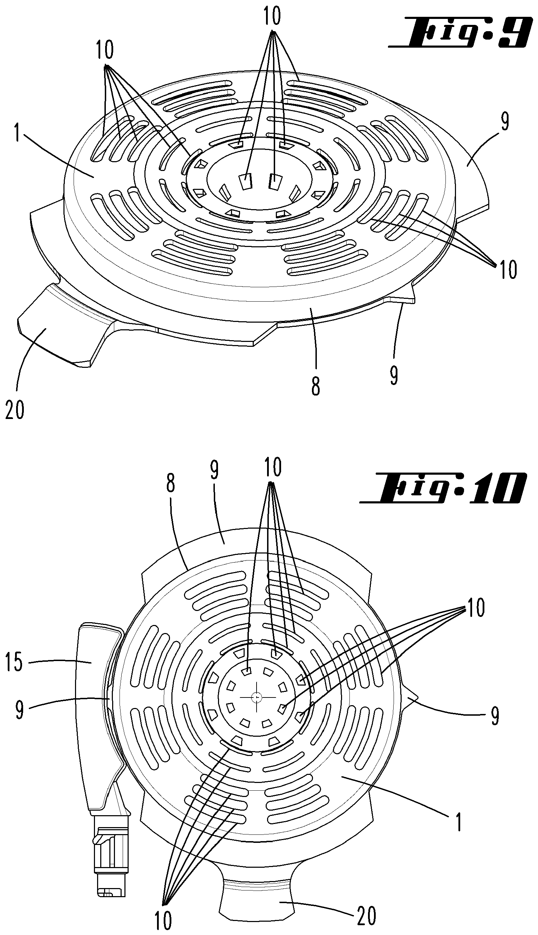

Figur 10 zeigt des Weiteren eine Verbindung zwischen dem Abdeckelement 1 und einem Verriegelungselement 15 der Verriegelungseinrichtung 14 der Küchenmaschine 4. Die Anordnung ist ein Teilausschnitt aus dem in Figur 1 dargestellten Verriegelungszustand des Zubereitungsgefäßes 3 mit dem Abdeckelement 1 (ohne Gefäßdeckel 6 dargestellt). In dem dargestellten Verriegelungszustand greift das Auflageelement 9 des Abdeckelementes 1 in den Verriegelungsbereich des Verriegelungselementes 15 ein. Die Abstände zwischen den in Umfangsrichtung benachbarten Auflageelementen 9 sind so bemessen, dass ein erstes Auflageelement 9 nicht aus dem Verriegelungsbereich des Verriegelungselementes 15 hinausgeschoben werden kann (bezogen auf eine Rotationsrichtung), ohne dass ein benachbartes Auflageelement 9 in den Verriegelungsbereich gelangt. Somit ist ein optimaler Schutz vor ungewünschtem Entfernen des Abdeckelementes 1 von dem Zubereitungsgefäß 3 geschaffen. Das Abdeckelement 1 weist gemäß dieser Ausgestaltung insgesamt vier Auflageelemente 9 auf, von welchen jeweils zwei paarweise gegenüberliegend symmetrisch ausgebildet sind. Zwei der Auflageelemente 9 sind im Wesentlichen dreieckig ausgebildet und ragen um hier beispielsweise 15 mm über die Basiskontur 8 des Auflagerandes 7 hinaus. Die beiden anderen Auflageelemente 9 sind bogenförmig an der Basiskontur 8 ausgebildet und ragen hier um ca. 20 mm über die Basiskontur 8 hinaus. Die bogenförmigen Auflageelemente 9 bilden einen Umfangsabschnitt des Abdeckelementes 1, welcher bezogen auf seinen nach außen weisenden Randbereich jeweils ungefähr einen Winkelbereich von 85° bedeckt.

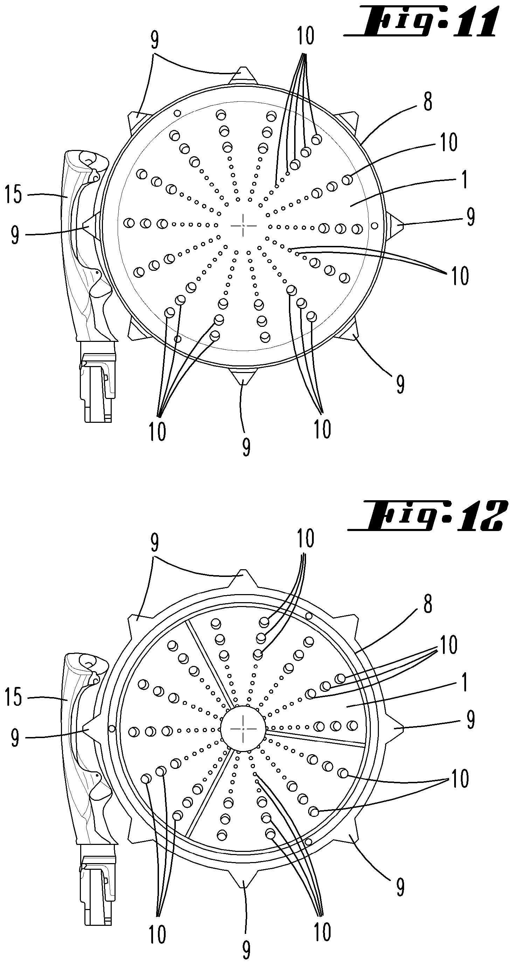

Die Figuren 11 und 12 zeigen weitere Ausführungsformen eines erfindungsgemäßen Abdeckelementes 1. Die Abdeckelemente 1 weisen jeweils acht Auflageelemente 9 auf, welche äquidistant an der Basiskontur 8 des Auflagerandes 7 angeordnet sind. Die Durchgangsöffnungen 10 sind kreisrund ausgestaltet, wobei sich deren Durchmesser von radial außen nach radial innen verkleinern. Die Figuren zeigen jeweils einen Freigabezustand der Verriegelungseinrichtung 14. Das Verriegelungselement 15 ist dabei von dem Abdeckelement 1 und damit auch dem Auflageelement 9 weggeschwenkt, so dass das Abdeckelement 1 von dem Zubereitungsgefäß 3 bzw. dem Gefäßdeckel 6 entfernt werden kann. Das Abdeckelement 1 gemäß Figur 12 weist gegenüber dem Abdeckelement 1 gemäß Figur 11 eine Segmentierung der großen Flächenseite auf. Dies kann bei der Herstellung vorteilhaft sein.

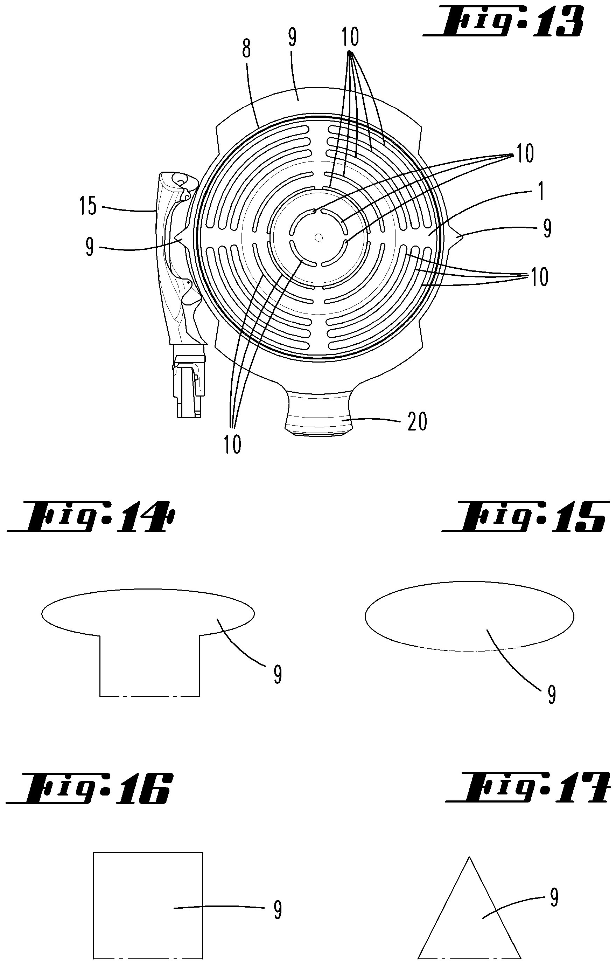

Figur 13 zeigt eine weitere Ausführungsform eines Abdeckelementes 1. Bei dieser Ausgestaltung weist das Abdeckelement 1 in vier Gruppen angeordnete Durchgangsöffnungen 10 auf, welche sich parallel zu der Umfangsrichtung jeweils entlang eines Winkelbereiches von etwas weniger als 90° erstrecken. Die absolute Länge der Durchgangsöffnungen 10 nimmt von radial außen nach radial innen betrachtet ab. Im Zentrum des Abdeckelementes 1 befindet sich eine einzelne kreisförmige Durchgangsöffnung 10. Die Durchgangsöffnungen 10 können selbstverständlich auch andere Größen und Formen als hier dargestellt aufweisen. Dies kann flexibel an die gewünschten Funktionen des Abdeckelementes 1 angepasst werden.

Die Figuren 14 bis 17 zeigen schließlich unterschiedliche Formen für Auflageelemente 9. Hier sind beispielsweise ovale, quadratische und dreieckige Formen gezeigt, sowie eine Kombination aus einer ovalen und rechteckigen Form.

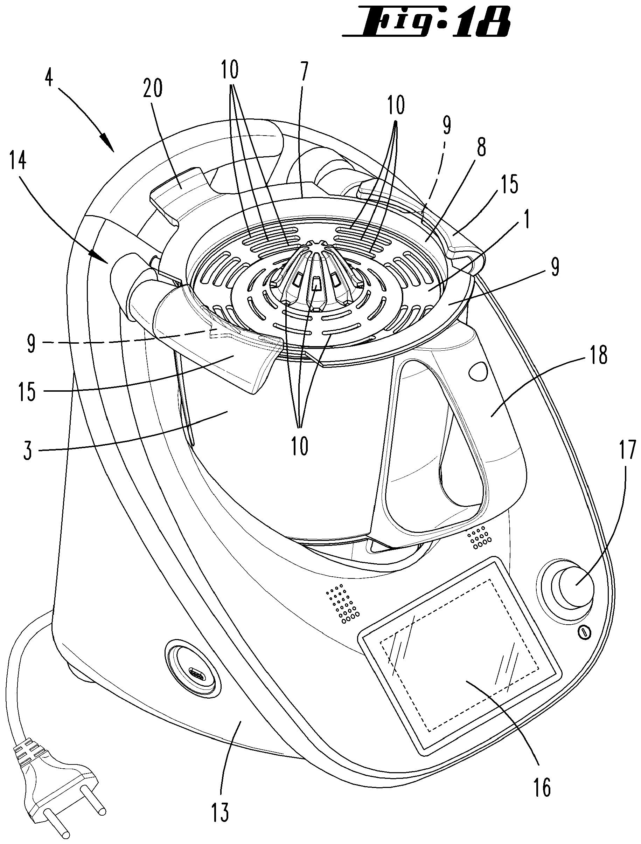

Fig. 18 zeigt eine Küchenmaschine 4 mit einem Zubereitungsgefäß 3 und einem als Zitronenpresse ausgebildeten Abdeckelement 1, dessen Erhebung 11 nach oben weist, d.h. von dem Zubereitungsgefäß 3 abgewandt ist. Das Abdeckelement 1 ist wie in Fig. 3 gezeigt ohne Zwischenanordnung eines Gefäßdeckels 6 auf das Zubereitungsgefäß 3 aufgelegt und mit Hilfe von Verriegelungselementen 15 verriegelt.

### Liste der Bezugszeichen

- 1: Abdeckelement
- 2: Gefäßöffnung
- 3: Zubereitungsgefäß
- 4: Küchenmaschine
- 5: Deckelöffnung
- 6: Gefäßdeckel
- 7: Auflagerand
- 8: Basiskontur
- 9: Auflageelement
- 10: Durchgangsöffnung
- 11: Erhebung
- 12: Rippe
- 13: Basisgerät
- 14: Verriegelungseinrichtung
- 15: Verriegelungselement
- 16: Display
- 17: Schalter
- 18: Gefäßgriff
- 19: Deckelgriff
- 20: Abdeckelementgriff

## Patentansprüche

1. Küchenmaschine (4) mit einem Basisgerät (13), einem an dem Basisgerät (13) anordenbaren Zubereitungsgefäß (3) und einem Abdeckelement (1) für das Zubereitungsgefäß (3), wobei das Abdeckelement (1) zum zumindest teilweisen Abdecken einer Gefäßöffnung (2) des Zubereitungsgefäßes (3) und/oder einer Deckelöffnung (5) eines Gefäßdeckels (6) für das Zubereitungsgefäß (3) ausgebildet ist, wobei das Abdeckelement (1) einen radial nach außen weisenden Auflagerand (7) zur Auflage auf dem Zubereitungsgefäß (3) und/oder dem Gefäßdeckel (6) aufweist, wobei der Auflagerand (7) in axiale Richtung betrachtet eine stetig gekrümmte Basiskontur (8) aufweist und der Auflagerand (7) mindestens zwei sich bezogen auf eine radiale Richtung gegenüberliegende und in einer Umfangsrichtung betrachtet voneinander gesonderte über die Basiskontur (8) hinausragende Auflageelemente (9) aufweist, und wobei die in einer von einem radial äußeren Rand der Auflageelemente (9) bis zu der Basiskontur (8) reichenden gedachten Kreisringfläche sich erstreckenden Auflageelemente (9) in der axialen Richtung betrachtet auf beiden gegenüberliegenden Seiten gleich und in derselben sich senkrecht zu der axialen Richtung erstreckenden Ebene ausgebildet sind, und wobei die Küchenmaschine (4) eine Verriegelungseinrichtung (14) zur Verriegelung des Abdeckelementes (1) mit dem Zubereitungsgefäß (3) aufweist, wobei das wahlweise nutzbare Abdeckelement (1) im verriegelten Zustand oberseitig auf dem Zubereitungsgefäß (3) aufliegt und von der Verriegelungseinrichtung (14) erfasst ist und/oder auf dem Gefäßdeckel (6) aufliegt und zugleich mit dem Gefäßdeckel (6) von der Verriegelungseinrichtung (14) erfasst ist, **dadurch gekennzeichnet, dass** die Verriegelungseinrichtung (14) mindestens zwei elektromotorisch antreibbare Verriegelungselemente (15) aufweist, welche die Auflageelemente (9) bezogen auf den verriegelten Zustand zumindest teilweise übergreifen.

2. Küchenmaschine (4) nach Anspruch 1, **dadurch gekennzeichnet, dass** ein Auflageelement (9) um mindestens 10 mm, bevorzugt um mindestens 15 mm, über die Basiskontur (8) hinausragt.

3. Küchenmaschine (4) nach Anspruch 1 oder 2, **dadurch gekennzeichnet, dass** das Abdeckelement (1) bezogen auf eine Flächenseite als Zitronenpresse mit einer zentralen kegelförmigen Erhebung (11) ausgebildet ist, wobei insbesondere die Erhebung (11) bezogen auf einen verriegelten Zustand in die zentrale Deckelöffnung (5) des Gefäßdeckels (6) eingreifbar ist.

4. Küchenmaschine (4) nach Anspruch 3, **dadurch gekennzeichnet, dass** die kegelförmige Erhebung (11) hervorstehende Rippen (12) und/oder eine Mehrzahl von Durchgangsöffnungen (10) aufweist.

5. Küchenmaschine (4) nach einem der vorhergehenden Ansprüche, **dadurch gekennzeichnet, dass** das Abdeckelement (1) eine Vielzahl von in radialer Richtung und/oder Umfangsrichtung hinter- und/oder nebeneinanderliegenden Durchgangsöffnungen (10) aufweist.

6. Küchenmaschine (4) nach Anspruch 5, **dadurch gekennzeichnet, dass** eine Durchgangsöffnung (10) eine Größe von ca. 1 mm² bis 200 mm², insbesondere von 10 mm² bis 100 mm², aufweist.

7. Küchenmaschine (4) nach Anspruch 5 oder 6, **dadurch gekennzeichnet, dass** in radial nach außen weisende Richtung aufeinanderfolgende Durchgangsöffnungen (10) ansteigende Größen aufweisen, so dass eine näher an dem Auflagerand (7) ausgebildete Durchgangsöffnung (10) größer ist als eine demgegenüber weiter von dem Auflagerand (7) beabstandete Durchgangsöffnung (10).

8. Küchenmaschine (4) nach einem der vorhergehenden Ansprüche, **dadurch gekennzeichnet, dass** das Zubereitungsgefäß (3) einen Gefäßdeckel (6) mit einer zentralen Deckelöffnung (5) aufweist, wobei der Gefäßdeckel (6) bezogen auf einen verriegelten Zustand zwischen dem Zubereitungsgefäß (3) und dem Abdeckelement (1) angeordnet ist.

## Claims

1. A food processor (4) with a base device (13), a preparation vessel (3) that can be arranged on the base device (13) and a cover element (1) for the preparation vessel (3), wherein the cover element (1) is designed for at least partially covering a vessel opening (2) of the preparation vessel (3) and/or a cover opening (5) of a vessel cover (6) for the preparation vessel (3), wherein the cover element (1) has a radially outwardly facing support edge (7) to be supported on the preparation vessel (3) and/or vessel cover (6), wherein the support edge (7) has a continuously curved base contour (8) viewed in the axial direction, and the support edge (7) has at least two support elements (9), which lie opposite each other in relation to a radial direction, separate from each other viewed in a circumferential direction, and protruding over the base contour (8), and wherein the support elements (9) extending in an imaginary circular ring surface reaching from a radially outer edge of the support elements (9) up to the base contour (8) are identically designed on both opposing sides viewed in the axial direction and formed in the same plane extending perpendicular to the axial direction, and wherein the food processor (4) has a locking device (14) for locking the cover element (1) with the preparation vessel (3), wherein the optionally useable cover element (1) rests on the preparation vessel (3) on the top side and is engaged by the locking device (14) and/or rests on the vessel cover (6), and along with the vessel cover (6) is engaged by the locking device (14), **characterized in that** the locking device (14) has at least two locking elements (15) that can be driven by an electric motor, which at least partially grip over the support elements (9) in relation to the locked state.

2. The food processor (4) according to claim 1, **characterized in that** a support element (9) protrudes over the base contour (8) by at least 10 mm, preferably by at least 15 mm.

3. The food processor (4) according to claim 1 or 2, **characterized in that** the cover element (1) in relation to a surface side is designed as a lemon squeezer with a central, conical elevation (11), wherein especially the elevation (11) can engage into the central cover opening (5) of the vessel cover (6) in relation to a locked state.

4. The food processor (4) according to claim 3, **characterized in that** the conical elevation (11) has protruding ribs (12) and/or a plurality of passage openings (10).

5. The food processor (4) according to one of the preceding claims, **characterized in that** the cover element (1) has a plurality of passage openings (10) lying one behind and/or next to the other in a radial direction and/or circumferential direction.

6. The food processor (4) according to claim 5, **characterized in that** a passage opening (10) has a size of approx. 1 mm² to 200 mm², in particular of 10 mm² to 100 mm².

7. The food processor (4) according to claim 5 or 6, **characterized in that** passage openings (10) that are sequential in the radially outwardly facing direction have increasing sizes, so that a passage opening (10) formed closer to the support edge (7) is larger than a passage opening (10) that is spaced further apart from the support edge (7) by comparison.

8. The food processor (4) according to one of the preceding claims, **characterized in that** the preparation vessel (3) has a vessel cover (6) with a central cover opening (5), wherein the vessel cover (6) is arranged between the preparation vessel (3) and cover element (1) in relation to a locked state.

## Revendications

1. Robot de cuisine (4), comprenant un dispositif de base (13), un récipient de préparation (3) pouvant être agencé sur le dispositif de base (13) et un élément de recouvrement (1) pour le récipient de préparation (3), dans lequel l'élément de recouvrement (1) est conçu pour recouvrir au moins partiellement une ouverture de récipient (2) du récipient de préparation (3) et/ou une ouverture de couvercle (5) d'un couvercle de récipient (6) pour le récipient de préparation (3), dans lequel l'élément de recouvrement (1) présente un bord d'appui (7) dirigé radialement vers l'extérieur pour s'appuyer sur le récipient de préparation (3) et/ou sur le couvercle de récipient (6), dans lequel le bord d'appui (7) présente, vu dans la direction axiale, un contour de base (8) courbé de manière continue et le bord d'appui (7) présente au moins deux éléments d'appui (9) opposés l'un à l'autre par rapport à une direction radiale et qui ont séparés l'un de l'autre et dépassent du contour de base (8) dans la direction périphérique, et dans lequel les éléments d'appui (9) qui s'étendent dans une surface annulaire circulaire imaginaire qui va d'un bord radialement extérieur des éléments d'appui (9) jusqu'au contour de base (8), sont formés de manière identique sur les deux côtés opposés vus dans la direction axiale et dans un même plan s'étendant perpendiculairement à la direction axiale, et dans lequel le robot de cuisine (4) comporte un dispositif de verrouillage (14) pour verrouiller l'élément de recouvrement (1) au récipient de préparation (3), dans lequel, à l'état verrouillé, l'élément de recouvrement (1) qui est utilisable sélectivement, repose sur le côté supérieur du récipient de préparation (3) et est saisi par le dispositif de verrouillage (14) et/ou repose sur le couvercle de récipient (6) et est saisi par le dispositif de verrouillage (14) en même temps que le couvercle de récipient (6), **caractérisé en ce que** le dispositif de verrouillage (14) présente au moins deux éléments de verrouillage (15) pouvant être entrainés par un moteur électrique, lesquels, par rapport à l'état verrouillé, recouvrent au moins partiellement les éléments d'appui (9).

2. Robot de cuisine (4) selon la revendication 1, **caractérisé en ce qu'**un élément d'appui (9) dépasse d'au moins 10 mm, de préférence d'au moins 15 mm, du contour de base (8).

3. Robot de cuisine (4) selon la revendication 1 ou 2, **caractérisé en ce que** l'élément de recouvrement (1) est conçu, par rapport à un côté de surface, en tant que presse-citron avec une élévation centrale de forme conique (11), dans lequel, en particulier, l'élévation (11) peut, par rapport à un état verrouillé, s'engager dans l'ouverture centrale (5) du couvercle de récipient (6).

4. Robot de cuisine (4) selon la revendication 3, **caractérisé en ce que** l'élévation de forme conique (11) présente des nervures saillantes (12) et/ou une pluralité d'ouvertures traversantes (10).

5. Robot de cuisine (4) selon l'une des revendications précédentes, **caractérisé en ce que** l'élément de recouvrement (1) présente une pluralité d'ouvertures de passage (10) situées les unes derrière les autres et/ou les unes à côté des autres dans la direction radiale et/ou dans la direction périphérique.

6. Robot de cuisine (4) selon la revendication 5, **caractérisé en ce qu'**une ouverture de passage (10) a une taille d'environ 1 mm² à 200 mm², en particulier de 10 mm² à 100 mm².

7. Robot de cuisine (4) selon la revendication 5 ou 6, **caractérisé en ce que** des ouvertures traversantes successives (10) ont des tailles croissantes dans la direction radiale vers l'extérieur de manière qu'une ouverture traversante (10) formée plus près du bord d'appui (7) est plus grande qu'une ouverture traversante (10) formée plus loin du bord d'appui (7).

8. Robot de cuisine (4) selon l'une des revendications précédentes, **caractérisé en ce que** le récipient de préparation (3) présente un couvercle de récipient (6) avec une ouverture de couvercle (5) centrale, le couvercle de récipient (6) étant agencé, par rapport à un état verrouillé, entre le récipient de préparation (3) et l'élément de recouvrement (1).
